# EUROPEAN PATENT APPLICATION

(11) **EP 4 810 246 A1**
(43) Date of publication of application: **23.09.2026**
(21) Application number: 24891529.0
(22) Date of filing: 15.11.2024
(51) Int. Cl.: B32B 7/022, B05D 1/36, B32B 15/08, C23C 28/00

(54) **METAL MATERIAL**

(30) Priority: 17.11.2023 JP 2023196297
(71) Applicant: Nippon Steel Corporation, Tokyo 100-8071 (JP)
(72) Inventor: FUTABA, Takashi, Tokyo 100-8071 (JP); UEDA, Koichiro, Tokyo 100-8071 (JP); MATSUNO, Masanori, Tokyo 100-8071 (JP)
(74) Representative: Zimmermann & Partner Patentanwälte mbB
(86) International application number: PCT/JP2024/040739
(87) International publication number: WO 2025/105494

(57) **Abstract**

A metallic material that has excellent scratch resistance and excellent corrosion resistance is provided. A metallic material (1) of the present disclosure includes a metallic substrate (10), a lower resin layer (20) formed on the metallic substrate (10), and an outermost resin layer (30) formed on the lower resin layer (20). A hardness HL of the lower resin layer (20) is 0.18 GPa or more. A hardness HH of the outermost resin layer (30) satisfies Formula (1), and a thickness TL (µm) of the lower resin layer and a thickness TH (µm) of the outermost resin layer satisfy Formula (2). $HH / HL < 0.90$ $TL + TH > 3.0$

## Description

### TECHNICAL FIELD

The present disclosure relates to a metallic material, and more particularly relates to a metallic material on which a resin layer is formed on a surface.

### BACKGROUND ART

Products such as building materials, automobiles, and electrical machinery and apparatuses (hereunder, also referred to as building materials and the like) are sometimes required to have design properties. Recently, there has been a tendency to favor materials which make use of the texture of metal, especially in Europe and the United States where many people are nature oriented. In the case of making use of the texture of metal, metal sheets such as stainless steel sheets or aluminum sheets or the like, which are excellent in corrosion resistance, are used. In addition, in order to further express the metallic feeling of stainless steel sheets and aluminum sheets, metal sheets that have a texture typified by hairlines formed on a surface thereof are also being provided.

Further, because stainless steel sheets and aluminum sheets are expensive, metal sheets that have a plating layer on a surface have been developed as one kind of alternative material to be used in place of stainless steel sheets and aluminum sheets. Similarly to a stainless steel sheet or an aluminum sheet, a metal sheet provided with a plating layer has appropriate corrosion resistance. In addition, a metal sheet provided with a plating layer has an excellent metal texture. Furthermore, if a texture is formed on a surface of the plating layer, excellent design properties can be obtained. For this reason, metal sheets that have a plating layer are suitable for application to building materials and the like, similarly to stainless steel sheets and aluminum sheets.

In this connection, metallic materials that are used for building materials, as typified by metal sheets, are formed into predetermined shapes by processing that is typified by press working or the like. In processing such as press working, burrs may be generated at end parts of the metallic material or swarf may be produced. If the burrs or swarf collides with or comes into contact with a surface of the metallic material, scratches may occur on the surface of the metallic material. Further, if the metallic material is used indoors, there is a possibility that furniture and fixtures or the like may collide with or come into contact with the surface of the metallic material. Furthermore, in a case where the metallic material is used outdoors, there is a possibility that flying objects such as metal shards or pebbles may collide with or come into contact with the surface of the metallic material. In the following description, burrs, swarf, furniture and fixtures and the like, pebbles, and metal shards and the like are also referred to collectively as "flying objects or the like". As mentioned above, scratches may occur on the surface of the metallic material due to these flying objects or the like colliding with or coming into contact with the surface of the metallic material. The occurrence of scratches reduces the corrosion resistance of the metallic material. Therefore, metallic materials that are used for building materials are also required to have excellent scratch resistance, and not just excellent corrosion resistance.

Therefore, in order to obtain excellent corrosion resistance and also excellent scratch resistance in a metallic material, a technique which forms a resin layer on a surface of the metallic material has been proposed.

For example, Japanese Patent Application Publication No. 2006-124824 (Patent Literature 1) discloses a metallic material in which, after a hairline finish is formed on a galvanized steel sheet, a transparent resin coating is formed on a surface of a galvanized layer on which hairlines have been formed. In the metallic material disclosed in Patent Literature 1, the transparent resin coating increases corrosion resistance and increases scratch resistance while also enhancing the design properties by making the surface of the plating layer visible.

Further, Japanese Translation of PCT International Application Publication No. 2013-536901 (Patent Literature 2) discloses a metallic material in which a galvanized steel sheet is subjected to rolling to form a texture on a surface of a galvanized layer, and thereafter the surface of the galvanized layer is coated with an organic film (resin) so that surface roughness falls within a certain range. In the metallic material disclosed in Patent Literature 2, while maintaining corrosion resistance, the design properties are enhanced by making the surface of the plating layer visible.

### CITATION LIST

### PATENT LITERATURE

Patent Literature 1: Japanese Patent Application Publication No. 2006-124824
Patent Literature 2: Japanese Translation of PCT International Application Publication No. 2013-536901

### SUMMARY OF INVENTION

### TECHNICAL PROBLEM

In the metallic materials disclosed in Patent Literature 1 and Patent Literature 2, scratch resistance can be increased while having sufficient corrosion resistance. However, excellent visibility, excellent corrosion resistance, and excellent scratch resistance in a metallic material may also be obtained by means other than the means disclosed in Patent Literature 1 and Patent Literature 2.

An objective of the present disclosure is to provide a metallic material that has excellent corrosion resistance and excellent scratch resistance.

### SOLUTION TO PROBLEM

A metallic material of the present disclosure includes a metallic substrate, a lower resin layer, and an outermost resin layer. The lower resin layer is formed on the metallic substrate. The outermost resin layer is formed as an outermost layer on the lower resin layer. A hardness HL of the lower resin layer is 0.18 GPa or more. A hardness HH of the outermost resin layer satisfies Formula (1). A thickness TL (µm) of the lower resin layer and a thickness TH (µm) of the outermost resin layer satisfy Formula (2). $HH / HL < 0.90$ $TL + TH > 3.0$

### ADVANTAGEOUS EFFECTS OF INVENTION

The metallic material of the present disclosure has excellent corrosion resistance and excellent scratch resistance.

### BRIEF DESCRIPTION OF DRAWINGS

[FIG. 1] FIG. 1 is a cross-sectional view perpendicular to a rolling elongation direction of a metallic material of the present embodiment.
[FIG. 2] FIG. 2 is a cross-sectional view perpendicular to the rolling elongation direction of the metallic material of the present embodiment that is different from FIG. 1.
[FIG. 3] FIG. 3 is a plan view of a surface of a metallic substrate or a surface of a plating layer illustrated in FIG. 1 or FIG. 2.
[FIG. 4] FIG. 4 is a cross-sectional view perpendicular to the rolling elongation direction of another metallic material of the present embodiment that is different from FIG. 1.

### DESCRIPTION OF EMBODIMENTS

The present inventors conducted studies regarding metallic materials that have excellent corrosion resistance and excellent scratch resistance.

First, the present inventors attempted to obtain excellent corrosion resistance and excellent scratch resistance by forming a resin layer on a surface of a metallic material, similarly to Patent Literature 1 and Patent Literature 2. As a result, it has been revealed that sufficient corrosion resistance can be obtained by making a thickness of the resin layer thicker than 3.0 µm.

However, it has been revealed that when the resin layer is formed on the surface of the metallic material, although sufficient corrosion resistance is obtained, scratches may occur on the surface of the metallic material. The resin layer on which scratches have occurred also reduces the corrosion resistance of the metallic material. Therefore, the present inventors investigated means for increasing the scratch resistance of the resin layer.

Initially the present inventors have considered making the resin layer hard. If the resin layer is hard, there is a possibility that even if flying objects or the like which are burrs, swarf, furniture and fixtures and the like, pebbles, and metal shards or the like come into contact with the surface of the resin layer, the tips of the flying objects or the like can be prevented from piercing the resin layer. However, even when the hardness of the resin layer was simply increased, there were still cases where scratches occurred on the resin layer and the metallic material. Hence the present inventors conducted further studies. As a result, the present inventors obtained the following finding.

In a metallic material in which the hardness of a resin layer has been increased, in a case where the tip of a flying object or the like is driven into the resin layer, the resin layer may exceed its plastic deformation limit and break, or the resin layer may peel off from the metallic material. These phenomena occur because, as a result of increasing the hardness of the resin layer, the resin layer is unable to sufficiently buffer the external force applied to the resin layer when the tip of the flying object or the like collides with or comes into contact with the resin layer.

Therefore, the present inventors conducted studies regarding means that can buffer an external force applied to a resin layer by a flying object or the like when a flying object or the like collides with or comes into contact with the resin layer. If the hardness of a resin layer is made low, the plastic deformation tolerance of the resin layer can be increased. Therefore, in a case where the tip of a flying object or the like is driven into the resin layer, there is a possibility that the occurrence of a situation where the resin layer exceeds its plastic deformation limit and breaks or the resin layer peels off from the metallic material can be suppressed.

Based on the results of the studies described above, the present inventors made the hardness of a resin layer formed on the surface of metallic materials low, and evaluated the scratch resistance. As a result, it has been found that in a case where the hardness of the resin layer was simply lowered, although breakage or peeling of the resin layer due to a flying object or the like that collided with or came into contact with the resin layer was suppressed, in some cases the tip of a flying object or the like that collided with or came into contact with the resin layer penetrated the resin layer and consequently scratches occurred on the surface of the metallic material.

Thus, the present inventors have considered that sufficient scratch resistance cannot be obtained if the resin layer is a single layer. Therefore, the present inventors have considered forming the resin layer as a plurality of layers which each have a different role, rather than making the resin layer a single layer.

First, the present inventors have thought of forming a resin layer composed of a lower resin layer formed on a metallic substrate, and an outermost resin layer to serve as an outermost layer formed on the lower resin layer. Further, the present inventors have thought that by making the outermost resin layer that would be subject to collision with or contact with flying objects or the like hard and making the lower resin layer softer than the outermost resin layer, scratch resistance would be increased. In the case of such a structure, the lower resin layer serves to buffer the impact or contact that the outermost resin layer is subjected to from a flying object or the like. On the other hand, the outermost resin layer performs a role of receiving the impact or contact with a flying objects or the like to thereby protect the surface of the metallic material.

However, it has been revealed that in the case of the above structure, sufficient scratch resistance is not obtained, and consequently the corrosion resistance of the metallic material decreases. It is considered that the reason for this is as follows. If the outermost resin layer is made hard and the lower resin layer is made softer than the outermost resin layer, in a case where the outermost resin layer cannot withstand the impact due to or contact with a flying object or the like, the outermost resin layer will be broken by the flying object or the like. In such a case, the lower resin layer, which is softer than the outermost resin layer, cannot exert a protective action against the flying object or the like. As a result, the flying object or the like penetrates the lower resin layer and reaches the surface of the metallic material, and consequently scratches occur.

Based on the above findings, the present inventors have conceived of deliberately making the outermost resin layer, which collides with or comes into contact with flying objects or the like, softer than the lower resin layer. In this case, the outermost resin layer acts to buffer an external force caused by a collision with or contact with a flying object or the like. On the other hand, the lower resin layer that is harder than the outermost resin layer acts to repel the flying object or the like whose force has been buffered and to thereby protect the surface of the metallic material. The present inventors have considered that by adopting the above combination, scratch resistance and corrosion resistance of a metallic material would increase.

Therefore, the present inventors conducted further studies regarding the relation between a hardness HL (GPa) of a lower resin layer and a hardness HH (GPa) of an outermost resin layer, and scratch resistance and corrosion resistance. As a result, the present inventors have discovered that in a metallic material, if the hardness HL of the lower resin layer is made 0.18 GPa or more, the hardness HH of the outermost resin layer satisfies Formula (1), and a thickness TL (µm) of the lower resin layer and a thickness TH (µm) of the outermost resin layer satisfy Formula (2), excellent scratch resistance and corrosion resistance will be obtained. $HH / HL < 0.90$ $TL + TH > 3.0$

The metallic material of the present disclosure was completed based on the technical idea described above, and has the following configurations.

A metallic material according to a first configuration includes a metallic substrate, a lower resin layer, and an outermost resin layer. The lower resin layer is formed on the metallic substrate. The outermost resin layer is formed as an outermost layer on the lower resin layer. A hardness HL of the lower resin layer is 0.18 GPa or more. A hardness HH of the outermost resin layer satisfies Formula (1). A thickness TL (µm) of the lower resin layer and a thickness TH (µm) of the outermost resin layer satisfy Formula (2). $HH / HL < 0.90$ $TL + TH > 3.0$

In the metallic material according to the first configuration, the outermost resin layer whose hardness is lower than the hardness of the lower resin layer is formed on the lower resin layer. Therefore, in a case where a flying object or the like collides with or comes into contact with the metallic material, the outermost resin layer whose hardness is lower than the hardness of the lower resin layer buffers an external force generated by the collision or contact. In addition, the lower resin layer whose hardness is higher than the hardness of the outermost resin layer, repels the tip of the flying object or the like whose force was buffered. By the hardness HL of the lower resin layer being made 0.18 GPa or more, and the hardness HH of the outermost resin layer satisfying Formula (1), the outermost resin layer whose hardness is low and the lower resin layer whose hardness is high suppress the occurrence of a situation in which the tip of a flying object or the like penetrates the lower resin layer and forms a scratch on the metallic material. As a result, excellent scratch resistance is obtained in the metallic material. In addition, by the thickness TL (µm) of the lower resin layer and the thickness TH (µm) of the outermost resin layer satisfying Formula (2), excellent corrosion resistance is obtained.

A metallic material according to a second configuration is in accordance with the metallic material of the first configuration, wherein the hardness HH of the outermost resin layer is 0.13 GPa or more.

In the metallic material according to the second configuration, scratch resistance is further increased.

A metallic material according to a third configuration is in accordance with the metallic material of the first configuration, wherein the thickness TL of the lower resin layer is 0.5 µm or more.

In the metallic material according to the third configuration, scratch resistance is further increased.

A metallic material according to a fourth configuration is in accordance with the metallic material of the first configuration, wherein the thickness TH of the outermost resin layer is 2.0 µm or more.

In the metallic material according to the fourth configuration, corrosion resistance and scratch resistance are further increased.

A metallic material according to a fifth configuration is in accordance with the metallic material of the first configuration, wherein the thickness TL and the thickness TH satisfy Formula (3). $TL + TH \leq 20.0$

In the metallic material according to the fifth configuration, design properties are further enhanced.

A metallic material according to a sixth configuration is in accordance with the metallic material of the first configuration, wherein the thickness TL and the thickness TH satisfy Formula (4). $TH / TL \geq 1.3$

In the metallic material according to the sixth configuration, scratch resistance is further increased.

A metallic material according to a seventh configuration is in accordance with the metallic material of the first configuration, wherein the metallic material further includes a plating layer. The plating layer is formed on the metallic substrate. The lower resin layer is formed on the plating layer.

In the metallic material according to the seventh configuration, even more excellent corrosion resistance is obtained.

A metallic material according to an eighth configuration is in accordance with the metallic material of the seventh configuration, wherein the metallic substrate is a steel material. The plating layer is composed of one or more types selected from a group consisting of Zn plating, Zn-Ni alloy plating, Zn-Fe plating, Zn-Co plating, Zn-Al plating, Zn-Fe-Al plating, Al-Si plating, and Zn-Al-Mg plating.

In the metallic material according to the eighth configuration, a plating layer having a sacrificial protection function is formed. Therefore, corrosion resistance is further increased.

A metallic material according to a ninth configuration is in accordance with the metallic material of the first configuration, wherein the lower resin layer contains organic resin and an inorganic pigment. The organic resin is composed of one or more types selected from a group consisting of polyester, urethane, and melamine. The inorganic pigment is composed of one or more types selected from a group consisting of BaSO₄, SiO₂, ZrO, TiO₂, and ZnO.

In the metallic material according to the ninth configuration, the hardness HL of the lower resin layer can be adjusted to 0.18 GPa or more by means of the inorganic pigment.

A metallic material according to a tenth configuration is in accordance with the metallic material of the first configuration, wherein the outermost resin layer contains organic resin composed of one or more types selected from a group consisting of polyester and melamine.

A metallic material according to an eleventh configuration is in accordance with the metallic material of the first configuration, wherein a texture is formed on a surface of the metallic material.

In the metallic material according to the eleventh configuration, design properties are further enhanced.

A metallic material according to a twelfth configuration is in accordance with the metallic material of the seventh configuration, wherein a texture is formed on a surface of the plating layer.

In the metallic material according to the twelfth configuration, design properties are further enhanced.

A metallic material according to a thirteenth configuration is in accordance with the metallic material of the eleventh or twelfth configuration, wherein the texture is hairlines.

In the metallic material according to the thirteenth configuration, design properties are further enhanced.

A metallic material according to a fourteenth configuration is in accordance with the metallic material of the first configuration, wherein the metallic material further includes a chemical conversion coating. The chemical conversion coating is formed on the metallic substrate. The lower resin layer is formed on the chemical conversion coating.

In the metallic material according to the fourteenth configuration, corrosion resistance is further increased.

Hereunder, a metallic material of the present embodiment is described in detail.

### <1. Regarding metallic material 1>

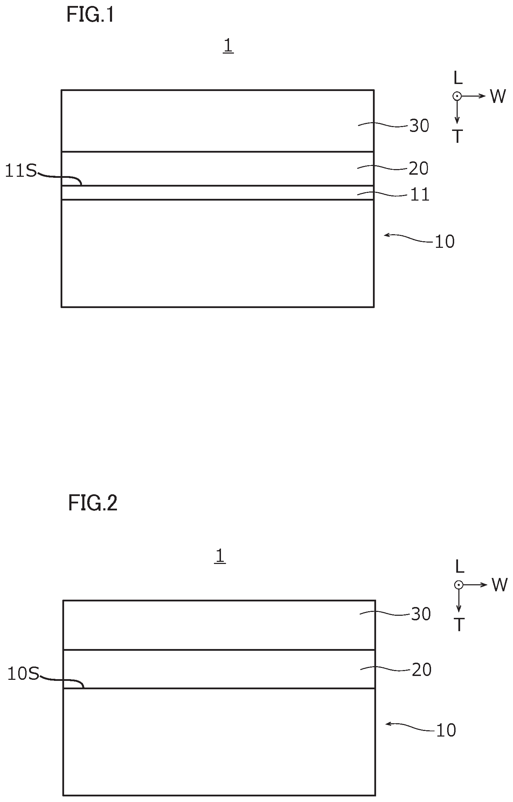

FIG. 1 is a cross-sectional view perpendicular to a rolling elongation direction of a metallic material 1 of the present embodiment. In FIG. 1, the rolling elongation direction of the metallic material 1 is defined as an "L direction". A thickness direction of the metallic material 1 is defined as a "T direction". A direction perpendicular to the L direction and the T direction of the metallic material 1 (that is, a width direction of the metallic material 1) is defined as a "W direction").

Referring to FIG. 1, the metallic material 1 of the present embodiment includes a metallic substrate 10, a plating layer 11, a lower resin layer 20, and an outermost resin layer 30. The metallic substrate 10 is a member that serves as a base material of the metallic material 1. The lower resin layer 20 and the outermost resin layer 30 increase the corrosion resistance and the scratch resistance of the metallic material 1. Note that, as illustrated in FIG. 2, the metallic material 1 of the present embodiment may have a configuration that includes the metallic substrate 10, the lower resin layer 20, and the outermost resin layer 30, and does not include the plating layer 11. That is, in the metallic material 1 of the present embodiment, the plating layer 11 is an optional component.

Hereunder, the metallic substrate 10, the plating layer 11, the lower resin layer 20, and the outermost resin layer 30 are described.

### <2. Regarding metallic substrate 10>

The metallic substrate 10 is a member that serves as the base material of the metallic material 1. It suffices to use a metal that corresponds to the mechanical properties (for example, tensile strength, workability and the like) required of the metallic material 1 as the metallic substrate 10. In other words, the type of the metallic substrate 10 is not particularly limited. The metallic substrate 10 is for example, a steel material, an aluminum material, an aluminum alloy material, or a titanium alloy material. The shape of the metallic substrate 10 is not particularly limited. The shape of the metallic substrate 10 may be, for example, a sheet shape, a bar shape, or a tube shape.

In a case where the metallic substrate 10 is a steel sheet, the type of the steel sheet is, for example, SPHC, SPHD, SPHE, SPCC, SPCD, SPCF or the like defined by the JIS Standard (JIS G 3131: 2018).

In a case where the metallic substrate 10 is an aluminum sheet, the type of the aluminum sheet is, for example, A1050P, A1080P, A1070P, A1100P or the like defined by the JIS Standard (JIS H 4000: 2014).

In a case where the metallic substrate 10 is an aluminum alloy sheet, the type of the aluminum alloy sheet is, for example, A2014P, A3003P, A3104P, A5005P or the like defined by the JIS Standard (JIS H 4000: 2014).

### <3. Regarding plating layer 11>

As mentioned above, the plating layer 11 is an optional component in the metallic material 1 of the present embodiment. That is, the metallic material 1 may include the plating layer 11 or need not include the plating layer 11. In a case where the metallic material 1 includes the plating layer 11, corrosion resistance of the metallic material 1 is further increased.

The plating layer 11 is, for example, a Ni-based plating layer, a Cu-based plating layer, a zinc-based plating layer (Zn-based plating layer), a Au-based plating layer, a Sn-based plating layer, an Al-based plating layer, or an alloy plating layer containing one or more types of element among Ni, Cu, Zn, Au, Sn, and Al. The above-mentioned X-based plating layer (X is one type of element among Ni, Cu, Zn, Au, Sn, and Al) means a plating layer mainly composed of X. The phrase "mainly composed of X" means that the content of X that is the main constituent element in the plating layer is at least 50% by mass or more. For example, the term "zinc-based plating layer" means a plating layer in which the content of Zn is 50% by mass or more.

In a case where the metallic substrate 10 is a steel material, preferably the plating layer 11 is composed of one or more types selected from a group consisting of a zinc-based plating layer and an Al-based plating layer. Zn and Al are base metals compared to Fe. Therefore, a zinc-based plating layer and an Al-based plating layer exert a sacrificial protection function with respect to the metallic substrate 10 that is a steel material. As a result, excellent corrosion resistance is obtained.

The zinc-based plating layer may be a plating layer composed of zinc plating, or may be a plating layer composed of zinc alloy plating.

The zinc-based plating layer is formed by a well-known plating treatment. For example, the zinc-based plating layer may be formed by either plating method among an electroplating method and a hot-dip plating method. The term "zinc-based plating layer" is a concept that includes an electrogalvanized layer, a zinc alloy electroplating layer, a hot dip galvanized layer, and a hot dip galvannealed layer.

It suffices that the zinc-based plating layer has a well-known chemical composition. A preferable content of Zn in the chemical composition of the zinc-based plating layer is 65% by mass or more. If the content of Zn is 65% or more in percent by mass, a sacrificial protection function will be markedly exhibited, and corrosion resistance of the metallic material 1 will markedly increase. A preferable lower limit of the content of Zn in the chemical composition of the zinc-based plating layer is 70% by mass, and more preferably is 80% by mass.

The chemical composition of the zinc-based plating layer preferably contains Zn and one or more types of element selected from a group of elements consisting of Al, Fe, Co, Cr, Cu, Ni, P, Si, Sn, Mg, Mn, Mo, V, W, Zr, Ca, Y, La, Ce, Bi, In, Ti, V, Nb, Cu, Mn, Sr, Sb, Pb, and B. In addition, in a case where the zinc-based plating layer is an electrogalvanized layer, the chemical composition of the zinc-based plating layer more preferably contains one or more types of element selected from a group of elements consisting of Fe, Ni, and Co in a total amount of 5 to 20% by mass. In a case where the zinc-based plating layer is a hot dip galvanized layer, the chemical composition of the zinc-based plating layer more preferably contains one or more types of element selected from a group of elements consisting of Mg, Al, and Si in a total amount of 5 to 49% by mass. In these cases, the zinc-based plating layer exhibits even more excellent corrosion resistance.

Preferably, the zinc-based plating layer consists of Zn-Ni alloy plating. Zn-Ni alloy plating is excellent in corrosion resistance, and also has high hardness. Therefore, Zn-Ni alloy plating is favorable as the zinc-based plating layer.

When the entire chemical composition of the Zn-Ni alloy plating is taken as 100% by mass, a preferable content of Ni is 10 to 20% by mass. In this case, the Zn-Ni alloy plating will be a single y phase. Therefore, the hardness of the Zn-Ni alloy plating will further increase. A more preferable lower limit of the content of Ni is 11% by mass, further preferably is 12% by mass, and further preferably is 14% by mass. A more preferable upper limit of the content of Ni is 18% by mass, further preferably is 17% by mass, and further preferably is 16% by mass.

The zinc-based plating layer may contain impurities. Here, the term "impurities" refers to substances which are mixed into the raw material or which are unintentionally mixed in during a production process. Examples of impurities include Ti, B, S, N, C, Nb, Pb, Cd, Ca, Pb, Y, La, Ce, Sr, Sb, O, F, Cl, Ag, H and the like. In the chemical composition of the plating layer 11, the total content of impurities is preferably 1% or less.

Further preferably, the plating layer is one or more types selected from a group consisting of Zn plating, Zn-Ni alloy plating, Zn-Fe plating, Zn-Co plating, Zn-Al plating, Zn-Fe-Al plating, Al-Si plating, and Zn-Al-Mg plating.

The Zn-Ni alloy plating has a chemical composition in which the content of Zn is 50% by mass or more and the content of Ni is 9% by mass or more.

The Zn-Fe plating has a chemical composition in which the content of Zn is 50% by mass or more and the content of Fe is 10% by mass or more.

The Zn-Co plating has a chemical composition in which the content of Zn is 50% by mass or more and the content of Co is 0.1% by mass or more.

The Zn-Al plating has a chemical composition in which the content of Zn is 50% by mass or more and the content of Al is 0.1% by mass or more.

The Zn-Fe-Al plating has a chemical composition in which the content of Zn is 50% by mass or more, the content of Fe is 8.0% by mass or more, and the content of Al is 0.1% by mass or more.

The Zn-Al-Mg plating has a chemical composition in which the content of Zn is 50% by mass or more, the content of Al is 1.0% by mass or more, and the content of Mg is 0.5% by mass or more.

The Al-Si plating has a chemical composition in which the content of Al is 50% by mass or more, and the content of Si is 2% by mass or more.

### [3.1. Method for measuring chemical composition of plating layer 11]

The chemical composition of the plating layer 11 is measured, for example, by the following method.

A test specimen that includes the plating layer 11 and also includes the surface of the plating layer 11 is prepared from the metallic material 1. A cross section of the test specimen that is perpendicular to the surface of the plating layer 11 is adopted as the observation surface. After embedding the test specimen in resin, the observation surface of the test specimen is mirror-polished. After polishing, an arbitrary 10 visual fields are selected in the plating layer 11 within the observation surface. The size of each visual field is to be 0.5 µm × 0.5 µm. In each visual field, surface analysis is performed by energy dispersive X-ray spectrometry (EDS). The contents of the elements contained in each measurement region are determined by the EDS surface analysis. In the EDS surface analysis, the acceleration voltage is set to 15 kV, and the surface analysis is conducted for quantification of Zn, Al, Co, Cr, Cu, Fe, Ni, P, Si, Sn, Mg, Mn, Mo, V, and W, and Zr, Ti, B, S, N, C, Nb, Pb, Cd, Ca, Pb, Y, La, Ce, Sr, Sb, O, F, Cl, Ag, and H as elements to be analyzed.

The arithmetic average value of the contents of the respective elements obtained at the 10 locations is determined. Note that, if the determined content (arithmetic average value) of Zn is 50% by mass or more, it is determined that the plating layer 11 that is the measurement object is a zinc-based plating layer.

### [3.2. Regarding texture TX]

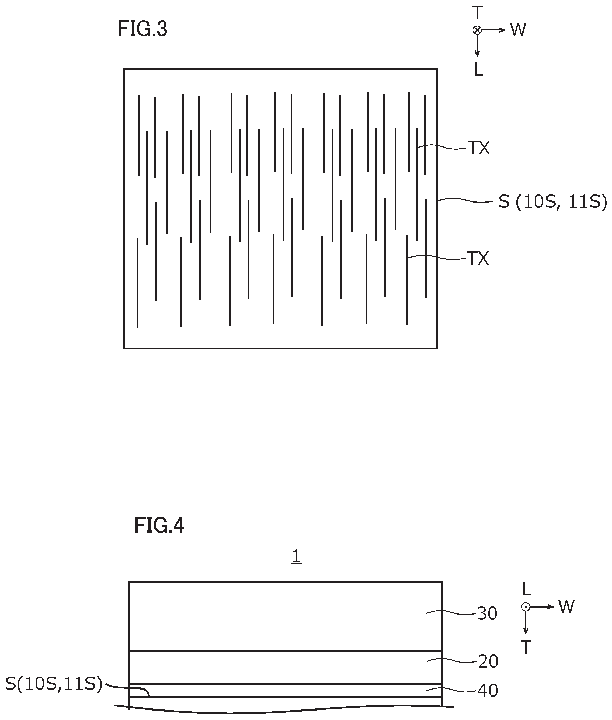

Referring to FIG. 3, a texture TX may be formed on a surface 10S of the metallic substrate 10 or on a surface 11S of the plating layer 11 (hereinafter, the surface 10S of the metallic substrate 10 and the surface 11S of the plating layer 11 are also collectively referred to as a "metal surface S"). Here, the term "texture TX" means a concavo-convex pattern that is formed on the metal surface S by a physical or chemical technique. The texture TX is a three-dimensional concavo-convex pattern on the metal surface S. The texture TX further enhances the design properties of the metallic material 1.

The texture TX is, for example, well-known hairlines, embossment, dots, a vibration finish, a satin (blast) finish, a hammered finish, a fabric (satin) finish or the like. Preferably, the texture TX is hairlines.

The texture TX may be formed on a part of the metal surface S, or may be formed on the entire metal surface S. In other words, there may be a region where the texture TX is not formed at a part of the metal surface S.

### <4. Regarding lower resin layer 20 and outermost resin layer 30>

The lower resin layer 20 and the outermost resin layer 30 increase corrosion resistance and scratch resistance of the metallic material 1.

Specifically, the hardness HL of the lower resin layer 20 is 0.18 GPa or more. In addition, the hardness HH of the outermost resin layer 30 satisfies Formula (1), and the thickness TL (µm) of the lower resin layer 20 and the thickness TH (µm) of the outermost resin layer 30 satisfy Formula (2). $HH / HL < 0.90$ $TL + TH > 3.0$

These matters are described hereunder.

### [4.1. Regarding hardness HL of lower resin layer 20]

The lower resin layer 20 has a protective action that repels the tip of a flying object or the like whose external force has been buffered by the outermost resin layer 30.

In a case where the hardness HL of the lower resin layer 20 is less than 0.18 GPa, a sufficient protective action will not be obtained. Consequently, if a flying object or the like collides with or comes into contact with the surface of the outermost resin layer 30 of the metallic material 1, the tip of the flying object or the like may reach the metal surface S and a scratch may occur. In such a case, the scratch resistance of the metallic material 1 will decrease. Therefore, the hardness HL of the lower resin layer 20 is to be made 0.18 GPa or more.

A preferable lower limit of the hardness HL of the lower resin layer 20 is 0.19 GPa, more preferably is 0.20 GPa, further preferably is 0.21 GPa, further preferably is 0.22 GPa, and further preferably is 0.23 GPa.

The upper limit of the hardness HL of the lower resin layer 20 is not particularly limited. In the case of further increasing workability of the lower resin layer 20, a preferable upper limit of the hardness HL is 0.38 GPa, more preferably is 0.36 GPa, further preferably is 0.35 GPa, further preferably is 0.33 GPa, and further preferably is 0.30 GPa.

### [4.2. Regarding Formula (1)]

In addition, the hardness HL of the lower resin layer 20 and the hardness HH of the outermost resin layer 30 satisfy Formula (1). $HH / HL < 0.90$

When the hardness HL of the lower resin layer 20 and the hardness HH of the outermost resin layer 30 satisfy Formula (1), the outermost resin layer 30 whose hardness is lower than the hardness of the lower resin layer 20 will sufficiently buffer an external force produced by a collision or contact with a flying object or the like. In addition, the lower resin layer 20 whose hardness is higher than the hardness of the outermost resin layer 30 will repel the tip of the flying object or the like whose force was buffered. Thus, by the combination of the lower resin layer 20 and the outermost resin layer 30 satisfying Formula (1), the protective action of the lower resin layer 20 and the buffering action of the outermost resin layer 30 sufficiently function. Therefore, the occurrence of a situation where the tip of a flying object or the like penetrates the lower resin layer 20 and forms a scratch on the metal surface S is suppressed. As a result, excellent scratch resistance is obtained in the metallic material 1.

A preferable upper limit of HH/HL is 0.89, more preferably is 0.88, further preferably is 0.86, further preferably is 0.84, further preferably is 0.82, and further preferably is 0.80.

A preferable lower limit of HH/HL is 0.38, more preferably is 0.40, further preferably is 0.45, further preferably is 0.50, further preferably is 0.55, further preferably is 0.60, further preferably is 0.65, and further preferably is 0.70.

### [4.3. Regarding preferable lower limit of hardness HH of outermost resin layer 30]

Preferably the hardness HH of the outermost resin layer 30 is 0.13 GPa or more. In such a case, scratch resistance of the metallic material 1 will further increase.

A more preferable lower limit of the hardness HH of the outermost resin layer 30 is 0.15 GPa, further preferably is 0.16 GPa, further preferably is 0.18 GPa, and further preferably is 0.20 GPa.

The upper limit of the hardness HH of the outermost resin layer 30 is not particularly limited. In the case of further increasing workability of the outermost resin layer 30, a preferable upper limit of the hardness HH is 0.30 GPa, more preferably is 0.28 GPa, further preferably is 0.26 GPa, further preferably is 0.25 GPa, and further preferably is 0.24 GPa.

### [4.4. Regarding Formula (2)]

The thickness TL (µm) of the lower resin layer 20 and the thickness TH (µm) of the outermost resin layer 30 satisfy Formula (2). $TL + TH > 3.0$

TL + TH means the total thickness of the resin layer (lower resin layer 20 and outermost resin layer 30). TL + TH relates to the corrosion resistance of the metallic material 1. If TL + TH satisfies Formula (2), the resin layer (lower resin layer 20 and outermost resin layer 30) is sufficiently thick. Therefore, excellent corrosion resistance is obtained in the metallic material 1.

A preferable lower limit of TL + TH is 3.2 µm, more preferably is 3.5 µm, further preferably is 3.8 µm, further preferably is 4.0 µm, further preferably is 4.3 µm, and further preferably is 4.5 µm.

### [4.5. Regarding Formula (3)]

Preferably, the total thickness TL + TH of the resin layer (lower resin layer 20 and outermost resin layer 30) satisfies Formula (3). $TL + TH \leq 20.0$

If TL + TH is 20.0 µm or less, in a case where the texture TX, which is typified by hairlines, is formed on the metal surface S (the surface 10S of the metallic substrate 10 or the surface 11S of the plating layer 11), when the metallic material 1 is visually observed, the design properties of the texture TX will be sufficiently high, even through the lower resin layer 20 and the outermost resin layer 30.

Note that, the lower resin layer 20 and the outermost resin layer 30 each have translucency. Here, the phrase "have translucency" means that when the metallic material 1 is placed in an environment equivalent to sunlight in the morning on a clear day (illuminance of about 65000 lux), the metal surface S is visible.

A more preferable upper limit of TL + TH is 19.8 µm, further preferably is 19.0 µm, further preferably is 18.0 µm, further preferably is 17.0 µm, further preferably is 16.0 µm, further preferably is 15.0 µm, further preferably is 14.0 µm, further preferably is 13.0 µm, and further preferably is 12.0 µm.

### [4.6. Regarding Formula (4)]

Preferably, the thickness TL of the lower resin layer 20 and the thickness TH of the outermost resin layer 30 satisfy Formula (4). $TH / TL \geq 1.3$

TH/TL is related to scratch resistance. If TH/TL is 1.3 or more, the outermost resin layer 30 is sufficiently thicker than the lower resin layer 20. In such a case, the buffering action of the outermost resin layer 30 will be sufficiently exerted. As a result, the scratch resistance of the resin layer (lower resin layer 20 and outermost resin layer 30) will be further increased.

A more preferable lower limit of TH/TL is 1.4, further preferably is 1.5, further preferably is 1.6, further preferably is 1.7, further preferably is 1.8, and further preferably is 1.9.

A preferable upper limit of TH/TL is 16.0, more preferably is 12.0, further preferably is 10.0, further preferably is 9.0, further preferably is 7.0, and further preferably is 6.0.

### [4.7. Regarding preferable thickness TL of lower resin layer 20]

Preferably the thickness TL (µm) of the lower resin layer 20 is 0.5 µm or more.

If the thickness TL of the lower resin layer 20 is 0.5 µm or more, the lower resin layer 20 will exert a greater protective action. Therefore, scratch resistance will increase further. Therefore, a preferable thickness TL is 0.5 µm or more.

A more preferable lower limit of the thickness TL is 0.8 µm, further preferably is 1.0 µm, further preferably is 1.2 µm, further preferably is 1.4 µm, and further preferably is 1.6 µm.

A preferable upper limit of the thickness TL is 8.5 µm, more preferably is 8.0 µm, further preferably is 7.5 µm, further preferably is 7.0 µm, further preferably is 6.5 µm, further preferably is 6.0 µm, further preferably is 5.5 µm, and further preferably is 5.0 µm.

### [4.8. Regarding preferable thickness TH of outermost resin layer 30]

Preferably the thickness TH (µm) of the outermost resin layer 30 is 2.0 µm or more.

If the thickness TH of the outermost resin layer 30 is 2.0 µm or more, the outermost resin layer 30 will exert a greater buffering action. Therefore, scratch resistance will increase further. Therefore, a preferable thickness TH is 2.0 µm or more.

A more preferable lower limit of the thickness TH is 2.2 µm, further preferably is 2.5 µm, further preferably is 3.0 µm, further preferably is 3.5 µm, and further preferably is 4.0 µm.

A preferable upper limit of the thickness TH is 15.0 µm, more preferably is 14.5 µm, further preferably is 14.0 µm, further preferably is 13.5 µm, further preferably is 13.0 µm, further preferably is 12.5 µm, further preferably is 12.0 µm, further preferably is 10.0 µm, further preferably is 9.0 µm, and further preferably is 8.5 µm.

### [4.9. Regarding method for measuring hardness HL and thickness TL of lower resin layer 20, and hardness HH and thickness TH of outermost resin layer 30]

A method for measuring the hardness HL (GPa) and the thickness TL (µm) of the lower resin layer 20 and the hardness HH (GPa) and the thickness TH (µm) of the outermost resin layer 30 is as follows.

A test specimen is taken that includes a cross section parallel to the normal direction of the surface of the metallic material 1, the surface of the metallic material 1, and the lower resin layer 20 and the outermost resin layer 30. Among the surfaces of the test specimen, the cross section parallel to the normal direction of the surface of the metallic material 1 is defined as the observation surface.

The observation surface of the test specimen is cut using a microtome from a direction perpendicular to a depth direction of the metallic material 1 until any effects, such as shear droop, caused by shear cutting are eliminated, to thereby expose a smooth observation surface. On the observation surface of the test specimen after cutting with the microtome, hardness (GPa) is measured by a nano-indentation method at respective measurement points spaced apart at a pitch of 0.2 µm in the depth direction of the metallic material 1, from the surface of the metallic material 1 (that is, the surface of the outermost resin layer 30) to an interface between the lower resin layer 20 and the metal surface S. Note that, on the observation surface, the positions of the respective measurement points are deviated in a width direction that is perpendicular to the depth direction of the metallic material 1 so that indentations, described later, at adjacent measurement points do not overlap with each other.

At each measurement point, hardness is measured using a nanoindenter. Specifically, using a Berkovich indenter, the hardness at each measurement point is measured by the nano-indentation method in accordance with the method described in ISO 14577. A load during measurement is set to 200 µN, a loading time is set to 5 seconds, a holding time is set to 2 seconds, and a unloading time is set to 5 seconds. The nanoindenter is, for example, an instrument with the product name "Hysitron TI 980" manufactured by Bruker Corporation.

The hardness measurement described above is carried out at 10 locations arranged at a pitch of 100 µm on an arbitrary line segment on the surface of the metallic material 1. Among the hardness values obtained at 10 measurement points at the same depth position from the surface of the outermost resin layer 30, hardness values at measurement points where an indentation can be distinctly confirmed are selected. An indentation is determined as being distinct if the indentation shape is equivalent to the projected shape of the indenter and there is no missing part among the sides of the outer edge of the indentation shape. Among the selected hardness values, four hardness values are selected in descending order starting from the hardness value with the highest value. The arithmetic average value of the selected four hardness values is calculated. The calculated value is defined as the hardness (GPa) at the relevant depth position. Note that, the hardness value obtained by calculating the arithmetic average value is rounded off to the second decimal place so as to be made a value to the second decimal place.

The relation between the hardness at each depth position and the depth position is graphed. In the obtained graph, a depth position where the hardness discontinuously changes is identified as the interface between the lower resin layer 20 and the outermost resin layer 30.

Based on the identified interface, the arithmetic average value of the hardnesses at all measurement points within the range of the lower resin layer 20 is defined as the hardness HL (GPa) of the lower resin layer 20. Further, based on the identified interface, the arithmetic average value of the hardnesses at all measurement points within the range of the outermost resin layer 30 is defined as the hardness HH (GPa) of the outermost resin layer 30.

In addition, the thickness TL (µm) of the lower resin layer 20 and the thickness TH (µm) of the outermost resin layer 30 are determined based on the identified interface. Specifically, the arithmetic average value of the thicknesses of the lower resin layer 20 determined at the aforementioned 10 locations is defined as the thickness TL (µm) of the lower resin layer 20. The arithmetic average value of the thicknesses of the outermost resin layer 30 determined at the aforementioned 10 locations is defined as the thickness TH (µm) of the outermost resin layer 30.

### [4.10. Regarding preferable chemical composition of lower resin layer 20]

The hardness of the lower resin layer 20 is higher than the hardness of the outermost resin layer 30, and the lower resin layer 20 has a protective action that can withstand a collision with or contact with a flying object or the like whose force has been buffered by the outermost resin layer 30. Such a lower resin layer 20 preferably has the following chemical composition.

Preferably, the lower resin layer 20 contains organic resin and an inorganic pigment.

The organic resin is composed of, for example, one or more types selected from a group consisting of well-known natural resin and well-known synthetic resin. The organic resin is composed of, for example, one or more types selected from a group consisting of epoxy-based resin, urethane-based resin, polyester-based resin, phenol-based resin, polyethersulfone-based resin, melamine-alkyd-based resin, acryl-based resin, polyamide-based resin, polyimide-based resin, silicone-based resin, polyvinyl acetate-based resin, polyolefin-based resin, polystyrene-based resin, vinyl chloride-based resin, and vinyl acetate-based resin.

More preferably, the organic resin is composed of, for example, one or more types selected from a group consisting of polyester-based resin, urethane-based resin, melamine-based resin and the like.

The metallic material 1 is usually subjected to cold working such as bending, and thereafter is used in an indoor environment or an outdoor environment. Therefore, the lower resin layer 20 is required to have properties such as ductility, elongation, hardness, chemical resistance, and water resistance. Polyester-based resin and urethane-based resin are excellent in the aforementioned properties. In addition, melamine-based resin is excellent in chemical resistance and hardness.

Furthermore, melamine-based resin reacts with the functional groups of polyester-based resin and the functional groups of urethane-based resin to further increase the degree of crosslinking. Therefore, further preferably, the organic resin of the lower resin layer 20 is composed of a melamine-based resin and at least one type of polyester-based resin and urethane-based resin.

The inorganic pigment is composed of, for example, one or more types selected from a group consisting of BaSO₄, SiO₂, ZrO, TiO₂, and ZnO.

If the lower resin layer 20 contains the aforementioned inorganic pigment, the lower resin layer 20 will densify. As a result, the hardness of the lower resin layer 20 will increase.

The particle size of the inorganic pigment is preferably small. A preferable particle size of the inorganic pigment is 270 nm or less. In such a case, the organic resin will be more uniformly densified.

In the lower resin layer 20, the desired hardness HL can be obtained by adjusting the structure of the aforementioned organic resin, the molecular weight of the monomer, oligomer, or polymer, the composition ratio of different types of organic resin, the amount of inorganic pigment added, and the types and added amounts of addition agents that are described later.

A preferable content of the organic resin in the lower resin layer 20 is, in percent by mass, 80% or more, more preferably is 90% or more, and further preferably is 97% or more.

### [4.11. Regarding preferable chemical composition of outermost resin layer 30]

The outermost resin layer 30 has a buffering action that absorbs an external force that accompanies a collision with a flying object. Such an outermost resin layer 30 preferably has the following chemical composition.

Preferably, the outermost resin layer 30 contains organic resin.

The organic resin is composed of, for example, one or more types selected from a group consisting of well-known natural resin and well-known synthetic resin. The organic resin is composed of, for example, one or more types selected from a group consisting of epoxy-based resin, urethane-based resin, polyester-based resin, phenol-based resin, polyethersulfone-based resin, melamine-alkyd-based resin, acryl-based resin, polyamide-based resin, polyimide-based resin, silicone-based resin, polyvinyl acetate-based resin, polyolefin-based resin, polystyrene-based resin, vinyl chloride-based resin, and vinyl acetate-based resin.

More preferably, the organic resin is composed of, for example, one or more types selected from a group consisting of polyester-based resin, urethane-based resin, and melamine-based resin. The polyester-based resin is, for example, polyester, the urethane-based resin is, for example, urethane, and the melamine-based resin is, for example, melamine.

As mentioned above, the metallic material 1 is usually subjected to cold working such as bending, and thereafter is used in an indoor environment or an outdoor environment. Therefore, similarly to the lower resin layer 20, the outermost resin layer 30 is also required to have properties such as ductility, elongation, hardness, chemical resistance, and water resistance. Polyester-based resin and urethane-based resin are excellent in the aforementioned properties. In addition, melamine-based resin is excellent in chemical resistance and hardness.

Furthermore, melamine-based resin reacts with the functional groups of polyester-based resin and urethane-based resin to further increase the degree of crosslinking. Therefore, further preferably, the organic resin of the outermost resin layer 30 is composed of melamine-based resin and at least one type of polyester-based resin and urethane-based resin. The polyester-based resin is, for example, polyester, and the urethane-based resin is, for example, urethane.

In the outermost resin layer 30, the desired hardness HH can be obtained by adjusting the structure of the aforementioned organic resin, the molecular weight of the monomer, oligomer, or polymer, the composition ratio of different types of organic resin, and the types and added amounts of addition agents that are described later.

In a case where the outermost resin layer 30 contains organic resin and an addition agent, a preferable content of the organic resin in the outermost resin layer 30 is, in percent by mass, 90% or more, more preferably is 95% or more, and further preferably is 97% or more.

A preferable content of the addition agent in the outermost resin layer 30 is, in percent by mass, 10% or less, more preferably is 5% or less, and further preferably is 3% or less. The content of the addition agent may be 0%, or may be more than 0%.

### [4.12. Regarding addition agents that can be contained in lower resin layer 20 and outermost resin layer 30]

Each of the lower resin layer 20 and the outermost resin layer 30 may further contain, as an addition agent, one or more types selected from a group consisting of a coloring pigment, organic resin particles, a leveling agent, an antifoaming agent, an aggregate, and a rheology modifier. Hereunder, the coloring pigment, the organic resin particles, the leveling agent, the antifoaming agent, the aggregate, and the rheology modifier are described.

### (1) Regarding coloring pigment

The coloring pigment is a fine particle (powder) that is an insoluble particle in water and oil. By containing a coloring pigment in the lower resin layer 20 or the outermost resin layer 30, the lower resin layer 20 or the outermost resin layer 30 will be colored. Coloring pigments are well-known, and the coloring pigment may be an inorganic pigment or may be an organic pigment. The coloring pigment is a chromatic color pigment. The term "chromatic color" means a color that has the attributes of hue, lightness, and chroma.

Preferably, the lower resin layer 20 contains a coloring pigment, and the outermost resin layer 30 does not contain a coloring pigment. As mentioned above, the outermost resin layer 30 has a buffering action, and the lower resin layer 20 has a protective action. Therefore, the outermost resin layer 30 easily deforms upon receiving an external force from a flying object or the like. On the other hand, the lower resin layer 20 does not easily deform even when subjected to an external force. If the outermost resin layer 30 does not contain a coloring pigment and the lower resin layer 20 contains a coloring pigment, the design properties associated with the coloring pigment will be easily maintained.

In a case where the coloring pigment is an inorganic pigment, the coloring pigment is, for example, one or more types selected from a group consisting of neutralization-precipitated pigments (sulfates, carbonates and the like) and calcined pigments (metallic sulfides, metallic oxides, polyvalent metal complex oxides and the like). In a case where the coloring pigment is an organic pigment, the coloring pigment is, for example, one or more types selected from a group consisting of chlorine pigments, azo pigments (soluble azo lake pigments, insoluble azo pigments and the like), acid condensation pigments, polycyclic pigments (phthalocyaninebased pigments, indigo-based pigments, quinacridone-based pigments, anthraquinone-based pigments and the like), and metal complex pigments (azo chelate pigments, transition metal complex pigments and the like).

The color of the coloring pigment is not particularly limited. The coloring pigment is, for example, a black pigment such as carbon black (C) or iron black (Fe₃O₄). However, the coloring pigment is not limited to a black pigment and may be a coloring pigment of a different color (white, purplish-red, yellow, greenish-blue, red, orange, green, blue, indigo blue, purple or the like).

The particle size of the coloring pigment is not particularly limited. However, the coloring pigment absorbs visible light to develop color. Therefore, taking into consideration the wavelength of visible light, a preferable lower limit of the particle size of the coloring pigment is more than 180 nm. The upper limit of the particle size of the coloring pigment is not particularly limited. A preferable upper limit of the particle size of the coloring pigment is 1000 nm, more preferably is 800 nm, and further preferably is 700 nm.

### (2) Regarding organic resin particles

The organic resin particles are also called wax. The organic resin particles are, for example, one or more types selected from a group consisting of urethane-based resin particles, acryl-based resin particles, hard polyethylene-based resin particles, polyethylene-based resin particles, polypropylene-based resin particles, and PTFE (polytetrafluoroethylene) particles.

Preferably the organic resin particles satisfy at least either one of the following (composition 1) and (composition 2).
(Composition 1) The hardness of the organic resin particles is higher than the hardness of base resin.
(Composition 2) The surface free energy of the organic resin particles is lower than the surface free energy of the base resin, and therefore the coefficient of friction of the resin particles is lower than the coefficient of friction of the base resin.

Here, the term "base resin" means organic resin described above in the section [4.10. Regarding preferable chemical composition of lower resin layer 20] and the section [4.11. Regarding preferable chemical composition of outermost resin layer 30] that constitutes the matrix (binder) of the lower resin layer 20 or the outermost resin layer 30. Some of the organic resin particles may protrude outward from the base resin. In comparison to the base resin, the organic resin particles are harder or have a smaller coefficient of friction. Therefore, the occurrence of scratches due to collision or contact with flying objects or the like can be further suppressed.

### (3) Regarding leveling agent

The leveling agent adjusts the surface tension of an outermost resin chemical agent that is a raw material of the outermost resin layer 30, and thereby makes the surface of the outermost resin chemical agent smooth after the outermost resin chemical agent is applied. By this means, the occurrence of unevenness or irregularity on the surface of the outermost resin layer 30 can be suppressed. The leveling agent is, for example, a fluorine-based surfactant, a silicone-based surfactant, or an acryl-based resin.

### (4) Regarding antifoaming agent

The antifoaming agent suppresses formation of bubbles in the lower-layer resin chemical agent and the outermost resin chemical agent which are slurries. The antifoaming agent is, for example, a silicone-based antifoaming agent, a non-silicone-based antifoaming agent, a mineral oil-based antifoaming agent, or a glycerin ester.

### (5) Regarding aggregate

The aggregate is a fine inorganic particle (powder) that is an insoluble particle in water and oil. By containing an aggregate in the lower resin layer 20 and the outermost resin layer 30, the volume of a coating material increases and deformation of the resin (lower resin layer 20 or outermost resin layer 30) is suppressed. The aggregate is, for example, one or more types selected from a group consisting of silica and talc. However, if the secondary particle size of the aggregate is larger than the wavelength of visible light (270 nm), the aggregate will scatter visible light. In such a case, sufficient design properties may not be obtained in the metallic material 1. Therefore, a preferable secondary particle size of the aggregate is 270 nm or less.

### (6) Regarding rheology modifier

The rheology modifier is also called a thickening agent. The rheology modifier adjusts the viscosity of the lower-layer resin chemical agent that is a raw material for the lower resin layer 20, and adjusts the viscosity of the outermost resin chemical agent that is the raw material for the outermost resin layer 30. By this means, adjustment of the coating mass of the lower-layer resin chemical agent and the outermost resin chemical agent is facilitated when applying the lower-layer resin chemical agent and the outermost resin chemical agent. The rheology modifier is, for example, an associative viscoelastic modifier, a polymeric viscoelastic modifier primarily composed of acrylic acid, or the like.

### <5. Optional component in metallic material 1>

As illustrated in FIG. 4, the metallic material 1 may further include a chemical conversion coating 40 between the metal surface S (the surface 10S of the metallic substrate 10 or the surface 11S of the plating layer 11) and the lower resin layer 20. That is, the chemical conversion coating 40 is an optional component, and does not have to be included. Hereunder, the chemical conversion coating 40 is described.

### [5.1. Regarding chemical conversion coating 40]

The chemical conversion coating 40 further increases the corrosion resistance of the metallic material 1. In addition, the chemical conversion coating 40 increases adhesion to the metal surface S and to the lower resin layer 20. The composition of the chemical conversion coating 40 may be a well-known composition. Preferably, the chemical conversion coating 40 contains an organosilicon compound, a specific inorganic compound containing one or more types of element among V, P, Zr, and Ti, and a fluorine compound.

### (1) Regarding organosilicon compound

The organosilicon compound is a compound in which silicon (Si) is bonded to an organic group. The type of organosilicon compound is not particularly limited.

Preferably, the organosilicon compound is a silane coupling agent. A silane coupling agent has a reactive functional group and a hydrolyzable group. The reactive functional group of the silane coupling agent bonds with organic material (organic resin), and the hydrolyzable group bonds with an inorganic material. Thus, the silane coupling agent can increase the adhesion to the metal surface S while also increasing the adhesion to the lower resin layer 20.

### (2) Regarding specific inorganic compound

The specific inorganic compound is a compound that contains one or more types of element selected from a group consisting of V, P, Zr, and Ti. The specific inorganic compound increases corrosion resistance of the metallic material 1.

### (2-1) Regarding V compound

A vanadium compound increases corrosion resistance. The vanadium compound is not particularly limited as long as it is a compound containing V.

The vanadium compound is, for example, one or more types selected from a group consisting of vanadium pentoxide V₂O₅, metavanadic acid HVO₃, ammonium metavanadate, sodium metavanadate, vanadium oxytrichloride VOCl₃, vanadium trioxide V₂O₃, vanadium dioxide VO₂, vanadium oxysulfate VOSO₄, vanadium oxyacetylacetonate VO(OC(=CH₂)CH₂COCH₃)₂, vanadium acetylacetonate V(OC(=CH₂)CH₂COCH₃)₃, and vanadium trichloride VCl₃. In addition, the vanadium compound may be a compound obtained by reducing a pentavalent vanadium compound to a tetravalent to divalent vanadium compound using an organic compound having at least one type of a functional group selected from a group consisting of a hydroxyl group, a carbonyl group, a carboxyl group, a primary to tertiary amino group, an amide group, a phosphate group, and a phosphonic acid group.

### (2-2) Regarding P compound

A P compound markedly increases corrosion resistance. The P compound is, for example, one or more types selected from a group consisting of phosphoric acid, ammonium phosphate, potassium phosphate, sodium phosphate, and the like. Preferably the P compound is phosphoric acid. When phosphoric acid is used, corrosion resistance increases further.

### (2-3) Zr compound

A Zr compound is a compound that contains Zr, such as Zr oxides, hydroxides, complex compounds, and salts with inorganic acids or organic acids. The Zr compound readily reacts with reactive functional groups. Therefore, the curing and crosslinking reaction of the Zr compound and the chemical conversion coating 40 are promoted, thereby increasing the denseness of the chemical conversion coating 40. As a result, corrosion resistance markedly increases.

The Zr compound is, for example, one or more types selected from a group consisting of zirconyl nitrate (ZrO(NO₃)₂), zirconyl acetate, zirconyl sulfate, ammonium zirconium carbonate {(NH₄)₂[Zr(CO₃)₂(OH)₂]}, and zirconium acetate.

### (2-4) Ti compound

Similarly to the Zr compound, a Ti compound readily reacts with reactive functional groups. Therefore, the Ti compound cures the chemical conversion coating 40 and increases the denseness of the chemical conversion coating 40. As a result, corrosion resistance of the metallic material 1 markedly increases.

The Ti compound is a compound that contains Ti, such as Ti oxides, hydroxides, complex compounds, and salts with inorganic acids or organic acids. The Ti compound is, for example, one or more types selected from a group consisting of titanyl sulfate (TiOSO₄), titanium lactate, diisopropoxytitanium bisacetylacetone {(C₅H₇O₂)₂Ti[OCH(CH₃)₂]₂}, and a reaction product of lactic acid and titanium alkoxide.

### (3) Regarding fluorine compound

A fluorine compound increases corrosion resistance of the chemical conversion coating 40. The fluorine compound is not particularly limited as long as it is a compound containing fluorine. The fluorine compound is, for example, one or more types selected from a group consisting of hydrofluoric acid, fluoroboric acid, fluorosilicic acid, fluorides of these, and complex fluoride salts of these.

Note that, the Zr compound and the fluorine compound may be combined. Specifically, the chemical conversion coating 40 may contain the Zr compound and the fluorine compound as separate compounds, or may contain a compound containing Zr and fluorine. For example, zirconium hydrofluoric acid acts as the Zr compound and also acts as the fluorine compound. Therefore, zirconium hydrofluoric acid contains the Zr compound and the fluorine compound. Further, the Ti compound and the fluorine compound may be combined. Specifically, the chemical conversion coating 40 may contain the Ti compound and the fluorine compound as separate compounds, or may contain a compound containing Ti and fluorine. For example, titanium hydrofluoric acid acts as the Ti compound and also acts as the fluorine compound. Therefore, titanium hydrofluoric acid contains the Ti compound and the fluorine compound.

### <6. Advantageous effect of metallic material 1>

The metallic material 1 composed as described above has excellent corrosion resistance and excellent scratch resistance. Therefore, the metallic material 1 can be widely applied to, for example, indoor electrical machinery and apparatus applications, outdoor automobile applications, and building material applications.

### <7. Method for producing metallic material 1>

The metallic material 1 of the present embodiment can be produced, for example, by the following method. Hereunder, one example of a method for producing the metallic material 1 is described. One example of the method for producing the metallic material 1 includes the following processes.
(Process 1) Metallic material preparation process
(Process 2) Plating layer formation process
(Process 3) Texture formation process
(Process 4) Chemical conversion coating formation process
(Process 5) Lower resin layer formation process
(Process 6) Outermost resin layer formation process

Here, process 2 to process 4 are optional processes. That is, each of process 2 to process 4 may be performed as necessary. Each process is described hereunder.

### [(Process 1) Metallic material preparation process]

In the metallic material preparation process, the metallic substrate 10 described above is prepared. As mentioned above, the metallic substrate 10 is, for example, a metal sheet, a metal bar, or a metal pipe.

### [(Process 2) Plating layer formation process]

The plating layer formation process is an optional process. The plating layer formation process is performed in the case of forming the plating layer 11 on the metallic substrate 10. Therefore, in a case where the plating layer 11 is not to be formed on the metallic substrate 10, the plating layer formation process is not performed.

In the plating layer formation process, the plating layer 11 is formed on the metallic substrate 10 by an electroplating method or a hot-dip plating method. It suffices to adopt a well-known plating method for the electroplating method and the hot-dip plating method.

In a case where the plating layer 11 is a zinc-based plating layer, for example the plating layer 11 is formed by the following electrogalvanizing process or hot-dip galvanizing process.

### (Electrogalvanizing process)

In the case of forming a zinc-based plating layer by an electrogalvanizing process, the electrogalvanizing process may be performed by a well-known method. In the present description, the term "electrogalvanizing process" also includes a zinc alloy electroplating process. It suffices to use a well-known electrogalvanizing solution as a plating solution used in the electrogalvanizing process. The electrogalvanizing solution is, for example, a sulfate bath, a chloride bath, a zincate bath, a cyanide bath, a pyrophosphate bath, a boric acid bath, a citrate bath, another complex bath, or a combination of these baths. A zinc alloy electroplating solution contains, for example, in addition to Zn ions, one or more kinds of single ions or complex ions selected from a group consisting of Fe, Ni, Co, Cr and C. Further, an organic addition agent or the like may be added to the electrogalvanizing solution or the zinc alloy electroplating solution in order to obtain a desired effect such as a leveling effect or an increase in hardness.

### (Hot-dip galvanizing process)

In the case of forming the plating layer 11 consisting of a zinc-based plating layer by a hot-dip galvanizing process, the hot-dip galvanizing process may be performed by a well-known method. It suffices to use a well-known plating bath as a plating bath used in the hot-dip galvanizing process. The plating bath, for example, contains Al with the balance being Zn and an impurity. The impurity is, for example, Fe. The plating bath may also contain, in addition to Zn, Al, and Fe, one or more types of element selected from a group of elements consisting of Co, Cr, Cu, Ni, P, Si, Sn, Mg, Mn, Mo, V, W, Zr, Ca, Y, La, Ce, Bi, In, Ti, V, Nb, Cu, Mn, Sr, Sb, Pb, and B.

The plating layer 11 is formed on the metallic substrate 10 by the above production process.

### [(Process 3) Texture formation process]

The texture formation process is an optional process. The texture formation process is performed in the case of forming the texture TX on the metal surface S (the surface 10S of the metallic substrate 10 or the surface 11S of the plating layer 11). In the texture formation process, the metal surface S is subjected to texturing to form the texture TX.

In a case where the texture TX is to be hairlines, well-known hairline processing is performed. Examples of hairline processing include a method that forms hairlines by abrading the surface with a well-known abrasive belt, a method that forms hairlines by abrading the surface with a well-known abrasive brush, and a method that forms hairlines by transferring a hairline shape by rolling with a roll to which a hairline shape has been imparted. The length, depth and frequency of the hairlines can be adjusted by adjusting the grain size of a well-known abrasive belt, the grain size of a well-known abrasive brush, or the surface shape of a roll. Note that, as the hairline processing, a method that forms hairlines by abrading the surface with an abrasive belt or an abrasive brush is preferable from the viewpoint of surface quality.

In a case where the texture TX is an uneven shape such as an embossment, dots, or a vibration finish, a well-known transfer method using a roll may be performed. Specifically, a roll on which the texture TX having an uneven shape such as an embossment is formed is prepared. The prepared roll is pressed against the metal surface S to transfer the uneven shape formed on the roll to the metal surface S. An uneven shape such as an embossment can be formed on the metal surface S by the above process.

### (Process 4) Chemical conversion coating formation process

The chemical conversion coating formation process is an optional process. That is, the chemical conversion coating formation process need not be performed. In the chemical conversion coating formation process, the chemical conversion coating 40 is formed on the metal surface S. A production line used in the chemical conversion coating formation process includes a conveying line and, in order from upstream toward downstream of the conveying line, a coating material application apparatus and a baking furnace.

The metallic substrate 10 having the metal surface S is conveyed on the conveying line. The coating material application apparatus is arranged on the conveying line. The coating material application apparatus applies a chemical-conversion-coating chemical agent that is a raw material for the chemical conversion coating 40 to the metal surface S. The coating material application apparatus is, for example, a well-known coater. The well-known coater is, for example, a die coater, a roll coater, or a curtain coater.

The chemical-conversion-coating chemical agent contains the organosilicon compound, the specific inorganic compound containing one or more of V, P, Zr, and Ti, and the fluorine compound.

The baking furnace is arranged on the conveying line at a position downstream of the coating material application apparatus. The baking furnace dries and bakes the chemical-conversion-coating chemical agent applied to the metal surface S by the coating material application apparatus, to thereby form the chemical conversion coating 40. The peak metal temperature (PMT) (°C) in the baking furnace is set to, for example, 50 to 250°C.

### [(Process 5) Lower resin layer formation process]

In the lower resin layer formation process, the lower resin layer 20 is formed on the surface of the metal surface S or the chemical conversion coating 40. A production line used in the lower resin layer formation process includes a conveying line and, in order from upstream toward downstream of the conveying line, a coating material application apparatus and a baking furnace.

The metallic substrate 10 including the metal surface S or the chemical conversion coating 40 is conveyed on the conveying line. The coating material application apparatus is arranged on the conveying line. The coating material application apparatus applies a lower-layer resin chemical agent that is the raw material for the lower resin layer 20 to the metal surface S or the surface of the chemical conversion coating 40. The coating material application apparatus is, for example, a well-known coater.

The lower-layer resin chemical agent is a chemical agent that serves as the raw material for the lower resin layer 20. The lower-layer resin chemical agent contains organic resin and inorganic pigment.

The baking furnace is arranged on the conveying line at a position downstream of the coating material application apparatus. The baking furnace dries and bakes the lower-layer resin chemical agent applied to the metal surface S or the surface of the chemical conversion coating 40 by the coating material application apparatus, to thereby form the lower resin layer 20. The peak metal temperature PMT (°C) in the baking furnace is set to, for example, 150 to 250°C.

### [(Process 6) Outermost resin layer formation process]

In the outermost resin layer formation process, the outermost resin layer 30 is formed on the surface of the lower resin layer 20. A production line used in the outermost resin layer formation process includes a conveying line and, in order from upstream toward downstream of the conveying line, a coating material application apparatus and a baking furnace.

The metallic substrate 10 including the lower resin layer 20 is conveyed on the conveying line. The coating material application apparatus is arranged on the conveying line. The coating material application apparatus applies an outermost resin chemical agent that is the raw material for the outermost resin layer 30 to the surface of the lower resin layer 20. The coating material application apparatus is, for example, a well-known coater.

The outermost resin chemical agent is a chemical agent that serves as the raw material for the outermost resin layer 30. The outermost resin chemical agent contains an organic resin.

The baking furnace is arranged on the conveying line at a position downstream of the coating material application apparatus. The baking furnace dries and bakes the outermost resin chemical agent applied to the surface of the lower resin layer 20 by the coating material application apparatus, to thereby form the outermost resin layer 30. The peak metal temperature PMT (°C) in the baking furnace is set to, for example, 150 to 250°C.

Note that, in process 5 and process 6, the hardness HL of the lower resin layer 20 and the hardness HH of the outermost resin layer 30 are adjusted so that the produced metallic material 1 satisfies Formula (1). Furthermore, in process 5 and process 6, the thickness TL of the lower resin layer 20 and the thickness TH of the outermost resin layer 30 are adjusted so that the produced metallic material 1 satisfies Formula (2). Preferably, in process 5 and process 6, in addition, the thickness TL of the lower resin layer 20 and the thickness TH of the outermost resin layer 30 are adjusted so as to satisfy Formula (3) and Formula (4).

The metallic material 1 of the present embodiment is produced by the production process described above. Note that, the metallic material 1 may also be produced by another production method. The production method described above is one example of the method for producing the metallic material 1.

### EXAMPLES

Hereunder, advantageous effects of the metallic material 1 of the present embodiment are described more specifically by way of examples.

### [Regarding production of metallic material]

Metallic materials with the test numbers shown in Table 1 were produced by the following production process. Note that, all the metallic materials were produced as metal sheets.

### [Table 1]

**TABLE 1**

| Test Number | Metallic Substrate | Plating Layer | Texture | Chemical Conversion Coating | Lower Resin Layer | Outermost Resin Layer | Lower Resin Layer | | Outermost Resin Layer | | HH/HL | TL+TH | TH/TL | Scratch Resistance | Corrosion Resistance | Visibility | Design Properties | Remarks |
|---|---|---|---|---|---|---|---|---|---|---|---|---|---|---|---|---|---|---|
| | | | | | | | HL(GPa) | TL(µm) | HH(GPa) | TH(µm) | | | | | | | | |
| 1 | Steel Material | - | None | None | D | F | 0.29 | 3.8 | 0.24 | 6.0 | 0.83 | 9.8 | 1.6 | 3 | B | A | - | Inventive Example of Present Invention |
| 2 | Steel Material | - | None | Yes | L | B | 0.24 | 3.4 | 0.20 | 5.8 | 0.83 | 9.2 | 1.7 | 4 | A | A | - | Inventive Example of Present Invention |
| 3 | Steel Material | - | Hairlines | Yes | F | C | 0.23 | 1.8 | 0.19 | 6.3 | 0.83 | 8.1 | 3.5 | 4 | A | A | A | Inventive Example of Present Invention |
| 4 | Al Alloy | - | None | None | G | F | 0.24 | 2.2 | 0.19 | 5.1 | 0.79 | 7.3 | 2.3 | 3 | B | A | - | Inventive Example of Present Invention |
| 5 | Al Alloy | - | Hairlines | None | J | H | 0.26 | 3.3 | 0.22 | 4.8 | 0.85 | 8.1 | 1.5 | 3 | B | A | A | Inventive Example of Present Invention |
| 6 | Steel Material | Zn Plating | None | None | K | G | 0.38 | 3.6 | 0.25 | 5.9 | 0.66 | 9.5 | 1.6 | 3 | B | A | - | Inventive Example of Present Invention |
| 7 | Steel Material | Zn Plating | None | Yes | F | C | 0.26 | 2.9 | 0.20 | 6.3 | 0.77 | 9.2 | 2.2 | 4 | A | A | - | Inventive Example of Present Invention |
| 8 | Steel Material | Zn Plating | Embossment | Yes | J | F | 0.27 | 1.9 | 0.23 | 6.1 | 0.85 | 8.0 | 3.2 | 4 | A | A | A | Inventive Example of Present Invention |
| 9 | Steel Material | Zn Plating | Hairlines | Yes | K | F | 0.40 | 3.9 | 0.24 | 5.9 | 0.60 | 9.8 | 1.5 | 4 | A | A | B2 | Inventive Example of |
| | | | | | | | | | | | | | | | | | | Present Invention |
| 10 | Steel Material | Zn-Ni Plating | None | Yes | D | D | 0.33 | 1.6 | 0.24 | 5.8 | 0.73 | 7.4 | 3.6 | 4 | A | A | - | Inventive Example of Present Invention |
| 11 | Steel Material | Zn-Ni Plating | Hairlines | Yes | F | C | 0.24 | 1.8 | 0.21 | 7.6 | 0.85 | 9.4 | 4.2 | 4 | A | A | A | Inventive Example of Present Invention |
| 12 | Steel Material | Zn-Ni Plating | Hairlines | Yes | F | E | 0.24 | 1.6 | 0.19 | 4.4 | 0.77 | 6.0 | 2.8 | 4 | A | A | A | Inventive Example of Present Invention |
| 13 | Steel Material | Zn-Ni Plating | Hairlines | Yes | J | C | 0.25 | 3.9 | 0.20 | 6.0 | 0.80 | 9.9 | 1.5 | 4 | A | A | A | Inventive Example of Present Invention |
| 14 | Steel Material | Zn-Ni Plating | Hairlines | Yes | L | C | 0.26 | 3.5 | 0.19 | 6.6 | 0.72 | 10.1 | 1.9 | 4 | A | A | A | Inventive Example of Present Invention |
| 15 | Steel Material | Zn-Ni Plating | Hairlines | Yes | B | B | 0.21 | 3.1 | 0.18 | 4.6 | 0.86 | 7.7 | 1.5 | 3 | A | A | A | Inventive Example of Present Invention |
| 16 | Steel Material | Zn-Ni Plating | Hairlines | Yes | H | B | 0.18 | 2.2 | 0.15 | 5.2 | 0.83 | 7.4 | 2.4 | 3 | A | A | A | Inventive Example of Present Invention |
| 17 | Steel Material | Zn-Ni Plating | Hairlines | Yes | F | E | 0.25 | 1.2 | 0.20 | 11.6 | 0.80 | 12.8 | 9.7 | 3 | A | C | B2 | Inventive Example of Present Invention |
| 18 | Steel Material | Zn-Ni Plating | Hairlines | Yes | L | H | 0.24 | 0.8 | 0.20 | 5.1 | 0.83 | 5.9 | 6.4 | 3 | A | A | A | Inventive Example of Present Invention |
| 19 | Steel Material | Zn-Ni Plating | Hairlines | Yes | J | F | 0.28 | 8.9 | 0.22 | 11.6 | 0.79 | 20.5 | 1.3 | 4 | A | A | C | Inventive Example of Present Invention |
| 20 | Steel Material | Zn-Ni Plating | Hairlines | Yes | G | H | 0.24 | 0.3 | 0.20 | 4.6 | 0.83 | 4.9 | 15.3 | 2 | A | A | A | Inventive Example of Present Invention |
| 21 | Steel Material | Zn-Ni Plating | Hairlines | Yes | F | B | 0.26 | 2.2 | 0.17 | 4.5 | 0.65 | 6.7 | 2.0 | 3 | A | A | A | Inventive Example of Present Invention |
| 22 | Steel Material | Zn-Ni Plating | Hairlines | Yes | J | I | 0.25 | 3.1 | 0.15 | 5.8 | 0.60 | 8.9 | 1.9 | 3 | A | A | A | Inventive Example of Present Invention |
| 23 | Steel Material | Zn-Ni Plating | Hairlines | Yes | D | C | 0.32 | 1.6 | 0.12 | 6.2 | 0.38 | 7.8 | 3.9 | 2 | A | A | B1 | Inventive Example of Present Invention |
| 24 | Steel Material | Zn-Ni Plating | Hairlines | Yes | F | F | 0.27 | 1.5 | 0.19 | 3.3 | 0.70 | 4.8 | 2.2 | 3 | A | A | A | Inventive Example of Present Invention |
| 25 | Steel Material | Zn-Ni Plating | Hairlines | Yes | D | D | 0.33 | 1.5 | 0.23 | 8.1 | 0.70 | 9.6 | 5.4 | 4 | A | A | B2 | Inventive Example of Present Invention |
| 26 | Steel Material | Zn-Ni Plating | Hairlines | Yes | G | H | 0.25 | 3.1 | 0.21 | 13.3 | 0.84 | 16.4 | 4.3 | 4 | A | A | B1 | Inventive Example of Present Invention |
| 27 | Steel Material | Zn-Ni Plating | Hairlines | Yes | F | C | 0.24 | 1.5 | 0.19 | 2.3 | 0.79 | 3.8 | 1.5 | 3 | B | A | A | Inventive Example of Present Invention |
| 28 | Steel Material | Zn-Ni Plating | Hairlines | Yes | F | B | 0.27 | 1.7 | 0.20 | 17.9 | 0.74 | 19.6 | 10.5 | 4 | A | A | B1 | Inventive Example of Present Invention |
| 29 | Steel Material | Zn-Ni Plating | Hairlines | Yes | L | H | 0.26 | 1.3 | 0.21 | 1.9 | 0.81 | 3.2 | 1.5 | 2 | B | A | A | Inventive Example of Present Invention |
| 30 | Steel Material | Zn-Ni Plating | Hairlines | Yes | J | C | 0.24 | 2.0 | 0.21 | 4.2 | 0.88 | 6.2 | 2.1 | 3 | A | A | A | Inventive Example of Present Invention |
| 31 | Steel Material | Zn-Ni Plating | Hairlines | Yes | L | J | 0.27 | 4.1 | 0.24 | 6.2 | 0.89 | 10.3 | 1.5 | 3 | A | A | A | Inventive Example of Present Invention |
| 32 | Steel Material | Zn-Ni Plating | Hairlines | Yes | F | H | 0.25 | 4.6 | 0.20 | 9.1 | 0.80 | 13.7 | 2.0 | 4 | A | A | B1 | Inventive Example of Present Invention |
| 33 | Steel Material | Zn-Ni Plating | Hairlines | Yes | F | H | 0.24 | 6.9 | 0.17 | 11.8 | 0.71 | 18.7 | 1.7 | 4 | A | A | B1 | Inventive Example of Present Invention |
| 34 | Steel Material | Zn-Ni Plating | Hairlines | Yes | F | I | 0.25 | 1.1 | 0.13 | 3.3 | 0.52 | 4.4 | 3.0 | 3 | B | A | A | Inventive Example of Present Invention |
| 35 | Steel Material | Zn-Ni Plating | Hairlines | Yes | B | I | 0.19 | 7.2 | 0.13 | 14.3 | 0.68 | 21.5 | 2.0 | 4 | A | A | C | Inventive Example of Present Invention |
| 36 | Steel Material | Zn-Ni Plating | Hairlines | Yes | J | H | 0.25 | 3.6 | 0.18 | 5.1 | 0.72 | 8.7 | 1.4 | 3 | A | A | A | Inventive Example of Present Invention |
| 37 | Steel Material | Zn-Ni Plating | Hairlines | Yes | J | H | 0.26 | 3.3 | 0.19 | 4.2 | 0.73 | 7.5 | 1.3 | 3 | A | A | A | Inventive Example of Present Invention |
| 38 | Steel Material | Zn-Ni Plating | Hairlines | Yes | J | I | 0.26 | 3.5 | 0.15 | 4.3 | 0.58 | 7.8 | 1.2 | 2 | A | A | A | Inventive Example of Present Invention |
| 39 | Steel Material | Zn-Fe Plating | Hairlines | Yes | L | B | 0.26 | 3.7 | 0.22 | 6.1 | 0.85 | 9.8 | 1.6 | 4 | A | A | A | Inventive Example of Present Invention |
| 40 | Steel Material | Zn-Co Plating | Hairlines | Yes | F | C | 0.24 | 2.2 | 0.18 | 7.1 | 0.75 | 9.3 | 3.2 | 4 | A | A | A | Inventive Example of Present Invention |
| 41 | Steel Material | Zn-Al Plating | Hairlines | Yes | G | E | 0.24 | 1.8 | 0.20 | 4.1 | 0.83 | 5.9 | 2.3 | 4 | A | A | A | Inventive Example of Present Invention |
| 42 | Steel Material | Zn-Fe-Al Plating | Hairlines | Yes | J | F | 0.24 | 2.8 | 0.19 | 6.3 | 0.79 | 9.1 | 2.3 | 4 | A | A | A | Inventive Example of Present Invention |
| 43 | Steel Material | Al-Si Plating | Hairlines | Yes | F | H | 0.25 | 3.1 | 0.21 | 5.9 | 0.84 | 9.0 | 1.9 | 4 | A | A | A | Inventive Example of Present Invention |
| 44 | Steel Material | Zn-Al-Mg Plating | Hairlines | Yes | G | C | 0.25 | 2.4 | 0.20 | 5.5 | 0.80 | 7.9 | 2.3 | 4 | A | A | A | Inventive Example of Present Invention |
| 45 | Steel Material | Zn-A1-Mg Plating | Hairlines | Yes | J | I | 0.24 | 3.4 | 0.20 | 5.9 | 0.83 | 9.3 | 1.7 | 4 | A | A | A | Inventive Example of Present Invention |
| 46 | Steel Material | Zn-Al-Mg Plating | None | None | - | J | - | - | 0.26 | 5.7 | - | 5.7 | - | 1 | A | A | - | Comparative Example |
| 47 | Steel Material | Zn-Al-Mg Plating | None | None | F | - | 0.25 | 3.6 | - | - | - | 3.6 | - | 1 | B | A | - | Comparative Example |
| 48 | Steel Material | Zn-Al-Mg Plating | None | None | J | B | 0.24 | 0.7 | 0.19 | 2.1 | 0.79 | 2.8 | 3.0 | 2 | C | A | - | Comparative Example |
| 49 | Steel Material | Zn-Ni Plating | Hairlines | Yes | - | E | - | - | 0.19 | 6.3 | - | 6.3 | - | 1 | A | A | A | Comparative Example |
| 50 | Steel Material | Zn-Ni Plating | Hairlines | Yes | G | - | 0.23 | 6.2 | - | - | - | 6.2 | - | 1 | A | B | A | Comparative Example |
| 51 | Al | - | None | None | J | F | 0.24 | 2.2 | 0.23 | 6.9 | 0.96 | 9.1 | 3.1 | 1 | A | A | - | Comparative Example |
| 52 | Steel Material | Zn Plating | Hairlines | Yes | H | I | 0.16 | 3.0 | 0.14 | 4.8 | 0.88 | 7.8 | 1.6 | 1 | A | A | A | Comparative Example |
| 53 | Steel Material | Zn Plating | Hairlines | Yes | B | G | 0.19 | 1.9 | 0.26 | 4.9 | 1.37 | 6.8 | 2.6 | 1 | A | A | A | Comparative Example |
| 54 | Steel Material | Zn-Ni Plating | Hairlines | Yes | C | A | 0.12 | 3.9 | 0.03 | 5.1 | 0.25 | 9.0 | 1.3 | 1 | A | A | A | Comparative Example |
| 55 | Steel Material | Zn-Ni Plating | Hairlines | Yes | F | G | 0.21 | 2.8 | 0.26 | 5.0 | 1.24 | 7.8 | 1.8 | 1 | A | A | A | Comparative Example |
| 56 | Steel Material | Zn-Ni Plating | Hairlines | Yes | G | F | 0.25 | 0.6 | 0.20 | 2.1 | 0.80 | 2.7 | 3.5 | 2 | C | A | A | Comparative Example |

### [Metallic material preparation process]

Metal sheets (metallic materials) of the metal types described in the column "Metallic Substrate" in Table 1 were prepared. The term "Steel Material" in the column "Metallic Substrate" in Table 1 means that the metal sheet was a steel sheet (corresponding to SPHC in the JIS standard). The term "Al Alloy" means that the metal sheet was an aluminum alloy sheet (corresponding to A1014P in the JIS standard). The term "Al" means that the metal sheet was an aluminum sheet (corresponding to A1050P in the JIS standard).

### [Plating layer formation process]

In Test Nos. 6 to 50 and 52 to 56, a plating layer was formed on the metal sheet.

In Test Nos. 6 to 9 and 52 and 53, a Zn plating layer was formed as a plating layer by a well-known electroplating method (described as "Zn Plating" in the column "Plating Layer" in Table 1). The coating mass of the plating layer was 35 g/m². The chemical composition of each plating layer was measured by the method described above in the section [3.1. Method for measuring chemical composition of plating layer 11]. As a result, it was found that the plating layers of these test numbers each had a chemical composition composed of Zn.

In Test Nos. 10 to 38, 49, 50 and 54 to 56, a Zn-Ni plating layer was formed as a plating layer by a well-known electroplating method (described as "Zn-Ni Plating" in the column "Plating Layer" in Table 1). The coating mass of the plating layer was 35 g/m². The chemical composition of each plating layer was measured by the method described above in the section [3.1. Method for measuring chemical composition of plating layer 11]. As a result, it was found that the plating layers of these test numbers each had a chemical composition in which the content of Ni was 10 to 15% by mass with the balance being Zn.

In Test No. 39, a Zn-Fe plating layer was formed as a plating layer by a well-known electroplating method (described as "Zn-Fe Plating" in the column "Plating Layer" in Table 1). The coating mass of the plating layer was 35 g/m². The chemical composition of the plating layer was measured by the method described above in the section [3.1. Method for measuring chemical composition of plating layer 11]. As a result, it was found that the plating layer of Test No. 39 had a chemical composition in which the content of Fe was 15% by mass with the balance being Zn.

In Test No. 40, a Zn-Co plating layer was formed as a plating layer by a well-known electroplating method (described as "Zn-Co Plating" in the column "Plating Layer" in Table 1). The coating mass of the plating layer was 35 g/m². The chemical composition of the plating layer was measured by the method described above in the section [3.1. Method for measuring chemical composition of plating layer 11]. As a result, it was found that the plating layer of Test No. 40 had a chemical composition in which the content of Co was 2.0% by mass with the balance being Zn.

In Test No. 41, a Zn-Al plating layer was formed as a plating layer by a well-known hot-dip plating method (described as "Zn-Al Plating" in the column "Plating Layer" in Table 1). The coating mass of the plating layer was 90 g/m². The chemical composition of the plating layer was measured by the method described above in the section [3.1. Method for measuring chemical composition of plating layer 11]. As a result, it was found that the plating layer of Test No. 41 had a chemical composition in which the content of Al was 5.0% by mass with the balance being Zn.

In Test No. 42, a Zn-Al plating layer was formed by a well-known hot-dip plating method, and in addition the Zn-Al plating layer was alloyed by a well-known heating and alloying process to form a Zn-Fe-Al plating layer (described as "Zn-Fe-Al plating" in the column "Plating Layer" in Table 1). The coating mass of the plating layer was 45 g/m². The chemical composition of the plating layer was measured by the method described above in the section [3.1. Method for measuring chemical composition of plating layer 11]. As a result, it was found that the plating layer of Test No. 42 had a chemical composition in which the content of Fe was 13.0% by mass and the content of Al was 0.1% by mass, with the balance being Zn.

In Test No. 43, an Al-Si plating layer was formed as a plating layer by a well-known hot-dip plating method (described as "Al-Si Plating" in the column "Plating Layer" in Table 1). The coating mass of the plating layer was 60 g/m². The chemical composition of the plating layer was measured by the method described above in the section [3.1. Method for measuring chemical composition of plating layer 11]. As a result, it was found that the plating layer of Test No. 43 had a chemical composition in which the content of Si was 9% by mass with the balance being Al.

In Test Nos. 44 to 48, a Zn-Al-Mg plating layer was formed as a plating layer by a well-known hot-dip plating method (described as "Zn-Al-Mg Plating" in the column "Plating Layer" in Table 1). The coating mass of the plating layer was 90 g/m². The chemical composition of each plating layer was measured by the method described above in the section [3.1. Method for measuring chemical composition of plating layer 11]. As a result, it was found that the plating layers of these test numbers each had a chemical composition in which the content of Al was 11.0 to 19.0% by mass and the content of Mg was 3.0 to 6.0% by mass, with the balance being Zn.

### [Texture formation process]

A texture was formed on the surface of the metallic substrate of Test Nos. 3 and 5, and on the surface of the plating layer of Test Nos. 8, 9, 11 to 45, 49, 50, and 52 to 56. The term "Hairlines" in the column "Texture" in Table 1 means that hairlines were formed as a texture. The term "Embossment" means that an embossment was formed as a texture. In the hairline processing, the hairlines were formed using an abrasive brush. The embossment was formed on the plating layer using a roll.

### [Chemical conversion coating formation process]

In Test Nos. 2, 3, 7 to 45, 49, 50, and 52 to 56, a chemical conversion coating was formed on the metallic substrate or on the plating layer. For each of these test numbers, a chemical-conversion-coating chemical agent was prepared as follows. A silane coupling agent (A): 3-aminopropyltrimethoxysilane and a silane coupling agent (B): 3-glycidoxypropyltrimethoxysilane were prepared, and were added to water adjusted to pH 4 at a solid content mass ratio [(A)/(B)] of 1.0, and the mixture was stirred for a predetermined time to produce an organosilicon compound. A chemical-conversion-coating chemical agent containing the produced organosilicon compound, phosphoric acid that is a phosphate compound, vanadium oxysulfate (VOSO₄) that is a V compound, and zirconium hydrofluoric acid that is a Zr compound and a fluorine compound was produced. The produced chemical-conversion-coating chemical agent was used to form a chemical conversion coating on the metallic substrate or the plating layer.

### [Lower resin layer formation process]

The lower resin layer was formed on the metallic substrate, on the plating layer, or on the chemical conversion coating of each test number using a resin chemical agent corresponding to a chemical agent type symbol listed in the column "Lower Resin Layer" in Table 1. The composition of each of the resin chemical agents is shown in Table 2.

### [Table 2]

**TABLE 2**

| Chemical Agent Type | Resin | Addition Agent |
|---|---|---|
| A | Polyester | |
| B | Polyester, Melamine | |
| C | Polyester, Melamine | SiO₂ 4% by mass |
| D | Polyester, Melamine | SiO₂ 8% by mass |
| E | Polyester, Melamine | SiO₂ 4% by mass, Carbon Black |
| F | Polyester, Melamine | BaSO₄ |
| G | Polyester, Melamine | BaSO₄, Carbon Black |
| H | Acryl, Melamine | Beads |
| I | Urethane | |
| J | Urethane, Melamine | |
| K | Urethane, Melamine | SiO₂ 8% by mass |
| L | Urethane, Melamine | Carbon Black |

Note that, the structure, molecular weight, ratio, and addition agent amount of the organic resin of each chemical agent type in Table 2 were appropriately adjusted so that the hardness HL of the lower resin layer was adjusted to the value shown in the column "HL (GPa)" of the column "Lower Resin Layer" in Table 1. Note that, the content of BaSO₄ in Table 2 was set to 20% when taking the solid content of the corresponding chemical agent as 100% by mass, the content of beads was set to 2% when taking the solid content of the corresponding chemical agent as 100% by mass, and the content of carbon black was set to 1% by mass when taking the solid content of the corresponding chemical agent as 100% by mass.

The resin chemical agent was applied onto the metal layer or onto the chemical conversion coating using a coater, and then dried in a baking furnace. The peak metal temperature PMT of the baking furnace was in the range of 150 to 250°C. The lower resin layer was formed by the above process.

### [Outermost resin layer formation process]

After the lower resin layer was formed, the outermost resin layer was formed on the surface of the lower resin layer using a resin chemical agent corresponding to a chemical agent type symbol listed in the column "Outermost Resin Layer" in Table 1. Note that, the structure, molecular weight, ratio, and addition agent amount of the organic resin of each chemical agent type in Table 2 were appropriately adjusted so that the hardness HH of the outermost resin layer was adjusted to the value shown in the column "HH (GPa)" of the column "Outermost Resin Layer" in Table 1.

The resin chemical agent was applied onto the lower resin layer using a coater, and then dried in a baking furnace. The peak metal temperature PMT of the baking furnace was in the range of 150 to 250°C. The outermost resin layer was formed by the above process. The metal sheet (metallic material) of each test number was produced by the above production process.

### [Evaluation tests]

The metal sheet of each test number was subjected to the following evaluation tests.
(Test 1) Test to measure hardness and thickness of lower resin layer and outermost resin layer
(Test 2) Scratch resistance evaluation test
(Test 3) Corrosion resistance evaluation test
(Test 4) Visibility evaluation test
(Test 5) Design properties evaluation test

Test 1 to test 5 are described hereunder.

### [(Test 1) Test to measure hardness and thickness of lower resin layer and outermost resin layer]

The hardness HL (GPa) of the lower resin layer, the thickness TL (µm) of the lower resin layer, the hardness HH (GPa) of the outermost resin layer, and the thickness TH (µm) of the outermost resin layer of each test number were determined in accordance with the method described above in the section [4.9. Regarding method for measuring hardness HL and thickness TL of lower resin layer 20, and hardness HH and thickness TH of outermost resin layer 30]. An instrument with the product name "Hysitron TI 980" manufactured by Bruker Corporation was used as the nanoindenter. The obtained numerical values are shown in the column "HL (GPa)", the column "TL (µm)", the column "HH (GPa)", and the column "TH (µm)", respectively, in Table 1.

### [(Test 2) Scratch resistance evaluation test]

The scratch resistance of the metal sheet of each test number was evaluated by the following method.

A test specimen (50 mm × 100 mm × sheet thickness) was taken from the metal sheet of each test number. The test specimen was mounted and fixed to a sample stage of a friction tester equipped with a diamond stylus with a tip diameter of 0.09 mm R. A friction tester with the trade name "TriboGear TYPE: 14FW" manufactured by Shinto Scientific Co., Ltd., was used as the friction tester.

The diamond stylus was brought into vertical contact with the surface of the outermost resin layer of the test specimen. In a state in which the diamond stylus was in contact with the surface of the outermost resin layer of the test specimen, the sample stage to which the test specimen was fixed was slid at a scratching speed of 60 mm/sec. At such time, a load applied to the diamond stylus was varied, and whether or not a scratch was present was checked by visual inspection. The scratch resistance of the metal sheet was evaluated as described below based on the load when the occurrence of a scratch was visually confirmed. The obtained results are shown in the column "Scratch Resistance" in Table 1.
Scratch rating 1: Occurrence of a scratch was visually confirmed at a load of less than 30 gf
Scratch rating 2: Occurrence of a scratch was visually confirmed at a load which was 30 gf or more and less than 70 gf
Scratch rating 3: Occurrence of a scratch was visually confirmed at a load which was 70 gf or more and less than 120 gf
Scratch rating 4: Occurrence of a scratch was visually confirmed at a load of 120 gf or more

If the scratch rating was 2 or more, the relevant test specimen was evaluated as being excellent in scratch resistance. The evaluation results are shown in the column "Scratch Resistance" in Table 1.

### [(Test 3) Corrosion resistance evaluation test]

The corrosion resistance (long-term corrosion resistance) of the metal sheet of each test number was evaluated by the following method. A test specimen with dimensions of 75 mm × 100 mm × the sheet thickness was taken from the metal sheet of each test number. The end faces and back surface of the test specimen were protected with tape seals. Thereafter, a 5% NaCl salt spray test maintained at 35°C was conducted in accordance with JIS Z 2371 (2015). The test was conducted for 240 hours, and a rust generation ratio (%) after the test was determined. The test specimen was evaluated as follows based on the determined rust generation ratio.
A: Rust generation ratio was less than 1%.
B: Rust generation ratio was 1% or more and less than 5%.
C: Rust generation ratio was 5% or more.

If the evaluation was A or B, it was evaluated that excellent corrosion resistance was obtained. If the evaluation was C, it was evaluated that sufficient corrosion resistance was not obtained. The evaluation results are shown in the column "Corrosion Resistance" in Table 1.

### [(Test 4) Visibility evaluation test]

The visibility of a metal base material of the metallic material on which a texture was formed was evaluated by the following method.

The metallic material of each test number was placed in an environment equivalent to sunlight in the morning on a clear day (illuminance of about 65000 lux). Then, whether or not the metal base material of the surface of the metallic substrate or the surface of the plating layer was visible from the surface of the metallic material through the outermost resin layer and the lower resin layer was confirmed. The visibility was evaluated as follows based on the number of people who judged that the metal base material was visible.
A: Ten people all judged that the metal base material was visible.
B: Seven people or more and less than ten people judged that the metal base material was visible.
C: Less than seven people judged that the metal base material was visible.

If the evaluation was A or B, it was evaluated that sufficient visibility was obtained. If the evaluation was C, it was evaluated that sufficient visibility was not obtained. The evaluation results are shown in the column "Visibility" in Table 1.

### [(Test 5) Design properties evaluation test]

The design properties of the texture of the metallic material on which a texture was formed were evaluated by the following method.

First, the metallic material of each test number on which a texture was formed was placed outdoors in a manner so as to be inclined at an angle of 60° to a horizontal direction. At such time, the metallic material was placed so that the texture faced upward outdoors. Next, the metallic material was visually observed by observers who faced the metallic material from a location one meter away from the position where the metallic material had been placed on the ground. At such time, the line of sight of each observer was at the same height as the metallic material. A total of ten observers visually observed each metallic material, and made a sensory evaluation to evaluate whether or not the metallic material was excellent in design properties. The design properties were evaluated as follows based on the number of people who judged that the metallic material was excellent in design properties.
A: Nine or more people judged that the metallic material was excellent in design properties.
B1: Seven to eight people judged that the metallic material was excellent in design properties.
B2: Five to six people judged that the metallic material was excellent in design properties.
C: Less than five people judged that the metallic material was excellent in design properties.

If the evaluation was A, B1, or B2, it was evaluated that excellent design properties were obtained. If the evaluation was C, it was evaluated that sufficient design properties were not obtained. The evaluation results are shown in the column "Design Properties" in Table 1.

### [Evaluation results]

Referring to Table 1, in the metallic materials of Test Nos. 1 to 45, the hardness HL of the lower resin layer was 0.18 GPa or more. Further, the hardness HH of the outermost resin layer satisfied Formula (1). In addition, the thickness TL of the lower resin layer and the thickness TH of the outermost resin layer satisfied Formula (2). As a result, for these test numbers the scratch rating in the scratch resistance evaluation test was 2 or more, and thus excellent scratch resistance was obtained. Furthermore, the evaluation in the corrosion resistance evaluation test was B or more, and thus excellent corrosion resistance was obtained.

Among Test Nos. 1 to 45, in the test number excluding Test Nos. 20, 23, 29, and 38, the thickness TL of the lower resin layer was 0.5 µm or more, the hardness HH of the outermost resin layer was 0.13 GPa or more, the thickness TH of the outermost resin layer was 2.0 µm or more, and TH/TL was 1.3 or more. Therefore, the scratch rating in the scratch resistance evaluation test was 3 or more, and thus the scratch resistance was even more excellent.

Among Test Nos. 3, 5, 8, 9, and 11 to 45 in which a texture was formed on the test specimen, in the test numbers other than Test Nos. 19 and 35, TL + TH was 20.0 or less. Therefore, in these test numbers the design properties were even more excellent.

On the other hand, in Test Nos. 46 and 49, a resin layer corresponding to the lower resin layer was not formed. Therefore, the scratch rating in the scratch resistance evaluation test was 1, and thus sufficient scratch resistance was not obtained.

In Test Nos. 47 and 50, a resin layer corresponding to the outermost resin layer was not formed. Therefore, the scratch rating in the scratch resistance evaluation test was 1, and thus sufficient scratch resistance was not obtained.

In Test Nos. 48 and 56, the thickness TL of the lower resin layer and the thickness TH of the outermost resin layer did not satisfy Formula (2). Therefore, the evaluation in the corrosion resistance evaluation test was C, and thus sufficient corrosion resistance was not obtained.

In Test Nos. 51, 53, and 55, the hardness HH of the outermost resin layer did not satisfy Formula (1). Therefore, the scratch rating in the scratch resistance evaluation test was 1, and thus sufficient scratch resistance was not obtained.

In Test Nos. 52 and 54, the hardness HL of the lower resin layer was less than 0.18 GPa. Therefore, the scratch rating in the scratch resistance evaluation test was 1, and thus sufficient scratch resistance was not obtained.

An embodiment of the present disclosure has been described above. However, the embodiment described above is merely an example for carrying out the present disclosure. Therefore, the present disclosure is not limited to the above-described embodiment, and can be implemented by appropriately modifying the above-described embodiment within a range not departing from the gist thereof.

### REFERENCE SIGNS LIST

- 1: Metallic Material
- 10: Metallic Substrate
- 11: Plating Layer
- 20: Lower Resin Layer
- 30: Outermost Resin Layer

## Claims

1. A metallic material, comprising:
a metallic substrate,
a lower resin layer formed on the metallic substrate, and
an outermost resin layer formed as an outermost layer on the lower resin layer, wherein
a hardness HL of the lower resin layer is 0.18 GPa or more,
a hardness HH of the outermost resin layer satisfies Formula (1), and
a thickness TL (µm) of the lower resin layer and a thickness TH (µm) of the outermost resin layer satisfy Formula (2): $HH / HL < 0.90$ and $TL + TH > 3.0$

2. The metallic material according to claim 1, wherein
the hardness HH of the outermost resin layer is 0.13 GPa or more.

3. The metallic material according to claim 1, wherein
the thickness TL of the lower resin layer is 0.5 µm or more.

4. The metallic material according to claim 1, wherein
the thickness TH of the outermost resin layer is 2.0 µm or more.

5. The metallic material according to claim 1, wherein
the thickness TL and the thickness TH satisfy Formula (3): $TL + TH \leq 20.0$

6. The metallic material according to claim 1, wherein
the thickness TL and the thickness TH satisfy Formula (4): $TH / TL \geq 1.3$

7. The metallic material according to claim 1, further comprising:
a plating layer formed on the metallic substrate, wherein
the lower resin layer is formed on the plating layer.

8. The metallic material according to claim 7, wherein
the metallic substrate is a steel material, and
the plating layer is composed of one or more types selected from a group consisting of:
Zn plating, Zn-Ni alloy plating, Zn-Fe plating, Zn-Co plating, Zn-Al plating, Zn-Fe-Al plating, Al-Si plating, and Zn-Al-Mg plating.

9. The metallic material according to claim 1, wherein
the lower resin layer contains:
organic resin composed of one or more types selected from a group consisting of polyester, urethane, and melamine, and
an inorganic pigment composed of one or more types selected from a group consisting of BaSO₄, SiO₂, ZrO, TiO₂, and ZnO.

10. The metallic material according to claim 1, wherein
the outermost resin layer contains:
organic resin composed of one or more types selected from a group consisting of polyester and melamine.

11. The metallic material according to claim 1, wherein
a texture is formed on a surface of the metallic material.

12. The metallic material according to claim 7, wherein
a texture is formed on a surface of the plating layer.

13. The metallic material according to claim 11 or claim 12, wherein
the texture is hairlines.

14. The metallic material according to claim 1, further comprising:
a chemical conversion coating formed on the metallic substrate, wherein
the lower resin layer is formed on the chemical conversion coating.
